# EUROPEAN PATENT SPECIFICATION

(11) **EP 4 107 037 B1**
(45) Date of publication and mention of the grant of the patent: **21.05.2025**
(21) Application number: 21706915.2
(22) Date of filing: 18.02.2021
(51) Int. Cl.: B60R 21/231

(54) **AIRBAG SYSTEM FOR A VEHICLE**
AIRBAGSYSTEM FÜR EIN FAHRZEUG
SYSTÈME DE COUSSIN DE SÉCURITÉ GONFLABLE POUR UN VÉHICULE

(30) Priority: 18.02.2020 GB 202002205
(43) Date of publication of application: 28.12.2022
(73) Proprietor: Jaguar Land Rover Limited, Coventry, Warwickshire CV3 4LF (GB)
(72) Inventor: GLYN-DAVIES, Philip, Coventry, Warwickshire CV3 4LF (GB); ALLAN, Graham, Coventry, Warwickshire CV3 4LF (GB); BROWN, Richard, Coventry Warwickshire CV3 4LF (GB); MABEY, Jonathan, Coventry Warwickshire CV3 4LF (GB)
(74) Representative: Jaguar Land Rover Patents Department
(86) International application number: PCT/EP2021/054019
(87) International publication number: WO 2021/165392

(56) References cited:
- EP-A1- 1 279 565
- WO-A1-2016/164138
- DE-A1- 10 021 893
- DE-A1- 102007 051 281
- DE-A1- 102010 019 592
- DE-A1- 102017 131 140
- US-A- 2 834 606
- US-A1- 2007 210 565
- US-B1- 7 040 653

## Description

### TECHNICAL FIELD

The present disclosure relates to an airbag system for a vehicle. Aspects of the invention relate to an airbag system, to a method of deploying an airbag system and to a vehicle.

### BACKGROUND

In vehicles such as passenger cars and SUVs, inflatable airbag systems are regularly used to mitigate occupant injury during a vehicle accident. Airbag modules arranged to restrain occupants in the event of a frontal impact are typically referred to as frontal airbags and may be installed at various locations within an occupant compartment of the vehicle, including, but not limited to, in the steering wheel, in the dashboard and/or instrument panel, adjacent to, or mounted to, a roof of the vehicle, and/or adjacent the knee or leg position of a front occupant. Frontal airbags may be arranged to restrain one or more vehicle occupants as may be required.

As used herein, the terms "dashboard" and "instrument panel" refer to examples of interior surfaces of an occupant compartment of a vehicle, which are typically faced by one or more occupant when travelling in the vehicle. The instrument panel or dashboard is typically located at a front region of the occupant compartment (also referred to as the vehicle cabin) and often includes vehicle controls and or displays arranged to keep the vehicle occupants informed as to the operating condition and status of the vehicle in use. The instrument panel or dashboard may further include storage compartments, such as a glove compartment.

In order to ensure reliable performance of the airbags it is important to ensure the airbags deploy correctly and are in the correct position when required. This is achieved by careful configuration of the airbags themselves, the timing of their deployment and their interaction with the interior surfaces of the occupant compartment against which the airbag may react, both during deployment and whilst the airbag is restraining one or more vehicle occupants. In some circumstances, some features of the interior of the occupant compartment may be dictated by, or at least be compromised to some extent, so as to ensure airbag performance does not suffer or otherwise perform less than optimally in one or more respects.

In the case of shared mobility vehicles, and in particular, autonomous or driverless vehicles, occupants may travel facing rearward during travel as equally as they may travel facing forward. In addition, if a human driver is not required to control the movement of the vehicle, it may be desirable to change the configuration and layout of the occupant compartment so as to fully realise the benefits of travelling by an autonomous vehicle. However, legislative requirements demand that occupant restraint systems are still incorporated within any autonomous vehicle. Thus, the vehicle manufacturer is limited in aspects of layout and design of the vehicle cabin of an autonomous vehicle by aspects of the physical requirements of current airbag systems. The requirements of each aspect are not always compatible.

DE102007051281 discloses an airbag system where one chamber is fillable with gas in one stage and another chamber is fillable with gas in another stage. The system has a gas generator for producing gas for filling an airbag, where the gas generator is activatable in two stages. The airbag is formed from airbag chambers (6, 8), where the chamber (6) is fillable with gas in one stage and the chamber (8) is fillable with gas in another stage. The chamber (6) is completely separated from the chamber (8), and is formed smaller than the chamber (8). The chambers (6, 8) are fillable with gas such that the gas in the chamber (6) stays under a higher pressure (P1) than the gas in the chamber (8).

It is one aim of the present invention to address this problem.

### SUMMARY OF THE INVENTION

According to an aspect of the present invention, an airbag system for restraining an occupant of a vehicle during a vehicle impact, the airbag system having at least a first airbag and a second airbag, each of the first and second airbags being inflatable upon deployment and comprising: a mounting means for mounting the airbag in an occupant compartment of the vehicle; a restraint surface arranged to contact and restrain at least a region of a vehicle occupant in the event of a vehicle impact; and an airbag reaction surface, wherein the airbag reaction surface of the first airbag is arranged, during airbag deployment, to react against the airbag reaction surface of the second airbag so that the first and second airbags provide mutual airbag support for one another through the airbag reaction surfaces, wherein the first and second airbags are configured to have a different stiffness from one another when fully inflated, the different stiffness being achieved by using different materials for the first and second airbags or by coating the first and second airbags with different coatings.

In one embodiment, the first and second airbags are configured to react, as they are deployed, against respective first and second vehicle reaction surfaces defined within the occupant compartment of the vehicle.

By way of example, the first airbag may define an upper airbag arranged to deploy into an upper restraint region of the interior occupant compartment and the second airbag may define a lower airbag arranged to deploy into a lower restraint region of the occupant compartment, when the airbags are deployed.

In embodiments, the lower airbag may be configured to contact and bear a load from the occupant during the vehicle impact event when the first and second airbags are deployed, both through direct loading of the lower airbag from a lower body region of the occupant and, indirectly, through loading of the upper airbag from an upper body region of the occupant.

The upper airbag may be configured to contact and bear a load from the occupant directly from an upper body region of the passenger.

The invention provides the benefit that even if a vehicle which has relatively few features in the vehicle cabin against which the airbags can react when they are deployed, the system can operate successfully because each of the airbags itself provides a reaction surface to provide mutual cooperative support for the other airbag. Greater flexibility is provided in configuring the occupant compartment and the airbag system so that the requirements of both systems can be satisfied, without compromise to the requirement of the other. The invention provides particular benefit in autonomous vehicles, for example, where features within the occupant compartment or vehicle cabin may be minimal as there is no need for any user-operated steering system for the vehicle, and the dashboard assembly may be only limited. The lack of available surfaces within the occupant compartment to define reaction surfaces for the airbags is mitigated through the use of the airbags themselves to define reaction surfaces.

Other reaction surfaces for the airbags, in addition to the mutual support provided by the other airbag, may include the windscreen, the steering wheel and/or steering column (if provided), and fascia features within the front cabin.

The lower body region may include a lower leg of the occupant, which is the part of the lower limb that lies between the knee and the ankle. The lower body region may also include the thigh between the hip and knee, which makes up the rest of the lower limb. The term lower limb or "lower extremity" is commonly used to describe all of the occupant's leg. The restraint of the occupant's pelvis is partly done by direct restraint via a lap belt and partly by the restraint of the knees and lower limb by the lower airbag.

According to the invention, the first and second ones of the airbags are configured to have a different stiffness from one another when fully inflated. By way of example, the lower airbag may be configured to have a greater stiffness, compared to the upper airbag, when fully inflated.

According to the invention, variations in stiffness are achieved by using different materials for the airbags, or by coating the airbags with different coatings.

The airbags may be configured so that, when inflated fully, the airbags have substantially the same volume, or may have volumes which are of a similar size even if not identical.

It may be that least one of the airbags includes left and right side surfaces, and wherein at least a portion of at least one of the left and right side surfaces faces towards the vehicle occupant to define, in part, a further restraint surface to aid contact and restraint of the occupant during airbag deployment.

The sides of the airbags need not be aligned in parallel (e.g. each of the deployed airbags may form a trapezoidal shape).

In embodiments, one or more of the first and second airbags may include a wing portion arranged to provide enhanced airbag coverage for a feature within the occupant compartment when said at least one of the first and second airbags is inflated.

For example, the wing portion may provide coverage for the A-pillar of the vehicle which defines a surface of the occupant compartment, without interfering with a neighbouring airbag.

In some embodiments, the airbag system may include first, second and third airbags, wherein one of the airbags defines a reaction surface for the other two airbags.

By way of example, when fully inflated the third airbag may be disposed between the first and second airbags so as to define opposed reaction surfaces for a respective one of the first and second airbags.

A pair of airbags may include a right side airbag and a left side airbag. The right and left side airbag pairs may be asymmetric (e.g. one wider airbag and one narrower airbag, when deployed) if the vehicle is more likely to have a front occupant on one side of the vehicle than the other. The wider airbag will give good coverage for the front seat occupant and make the restraining of the occupant more robust against offset impacts, and the narrower airbag may be used if the other front seat is detected as being occupied.

In one embodiment, the airbag system may comprise a plurality of airbag pairs, each pair of airbags comprising a first airbag (hereinbefore referred to as the first airbag) and a second airbag (hereinbefore referred to as the second airbag). The airbag reaction surface of the first airbag of one pair is arranged, during airbag deployment, to react against the airbag reaction surface of the second airbag of the pair so that the airbags provide mutual airbag support for one another through the airbag reaction surfaces.

The airbag system may include a common inflator device for at least the first and second airbags of the airbag system. The airbag system may comprise a mounting structure for supporting the common inflator device for said airbags.

Alternatively, the airbag system may include one inflator device for the first airbag and a second inflator device for the second airbag.

In embodiments, the mounting means may include a common mounting structure for supporting the first inflator device and the second inflator device.

According to another aspect of the invention, there is provided a vehicle comprising a vehicle cabin and an airbag system of the previous aspect of the invention.

In embodiments, when fully inflated the first airbag and the second airbag may extend substantially across the full transverse width of the occupant compartment.

Alternatively, in other embodiments, the first airbag and the second airbag may define an airbag pair, and wherein the airbag system further includes a second airbag pair comprising a third airbag and a fourth airbag (having the features of the first and second airbag mentioned hereinbefore), and wherein, when fully inflated, the first and second airbags of the first airbag pair extend only part way across the transverse width of the occupant compartment to restrain an occupant seated on one side of the occupant compartment and the third and fourth airbags of the second airbag pair extend only part way across the transverse width of the occupant compartment to restrain an occupant seated on another side of the occupant compartment.

Further airbag pairs may be provided if additional seats or other provision for accommodating occupants are provided in the occupant compartment beyond two in number.

In a still further embodiment, when the first airbag is fully inflated it extends substantially across the full transverse width of the occupant compartment to define a reaction surface for the second airbag which, when fully inflated, extends only part way across the transverse width of the occupant compartment, the first airbag further defining a further reaction surface for a third airbag of the airbag system which, when fully inflated, extends only part way across the transverse width of the occupant compartment , adjacent to the second airbag.

According to another aspect of the invention, there is provided a method of deploying an airbag system in a vehicle, the airbag system comprising at least two airbags so as to protect a vehicle passenger during a vehicle impact event, each of the at least two airbags defining a restraint surface arranged to contact and restrain at least a region of a vehicle occupant in the event of a vehicle impact, wherein the first and second airbags are configured to have a different stiffness from one another when fully inflated, the different stiffness being achieved by using different materials for the first and second airbags or by coating the first and second airbags with different coatings, the method comprising; deploying the at least two airbags so that a surface of a first one of the airbags defines an airbag reaction surface for a second one of the airbags as it deploys and a surface of the second airbag defines an airbag reaction surface for the first airbag as it deploys so that the first and second ones of the airbags provide mutual airbag support for one another through the airbag reaction surfaces, and restraining a vehicle occupant during the vehicle impact only after the first one of the airbags has reacted against the airbag reaction surface of the second one of the airbags.

The method may comprise deploying one of the airbags before the other. The method may comprise deploying the first and second airbags at substantially the same time.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a side view of a vehicle within which an airbag system of the invention may be implemented;
Figure 2 shows a plan view of an interior occupant compartment in a vehicle within which an airbag system of the invention may be implemented;
Figures 3 to 10 are a sequence of figures, taken at 10ms intervals from deployment of the airbag system of the invention, to show how first and second airbags of the system interact to protect the occupant during a vehicle impact event;
Figure 11 is a flow diagram to illustrate the sequence of events that occur when the airbag system of the invention is deployed; and
Figures 12, 13 and 14 are plan views of an occupant compartment within a vehicle to illustrate three different configurations for upper and lower airbags of the airbag system of the invention.

### DETAILED DESCRIPTION

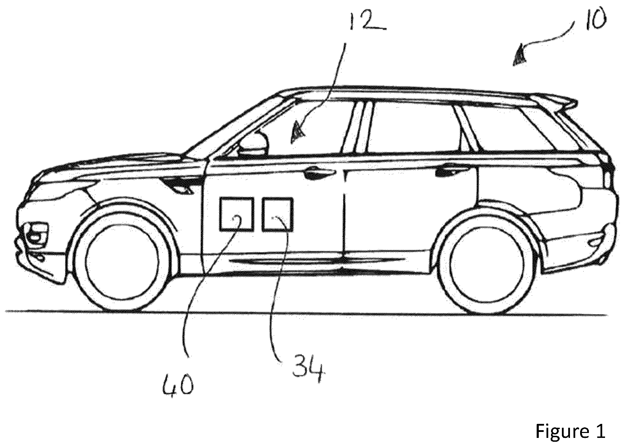

A vehicle in accordance with an embodiment of the present invention, and including an airbag system of an embodiment of the invention, is described herein with reference to the accompanying Figures 1 to 12.

Figure 1 shows a conventional vehicle 10 having an interior vehicle cabin or occupant compartment 12 which typically has two front seats (not shown in Figure 1). In the case of a conventionally controlled vehicle, the front seats are typically provided for a driver who controls the vehicle and for a passenger seated next to them. In an example where the vehicle is capable of autonomous driving, both seated front occupants may be considered as passengers whilst the vehicle is operating autonomously. Regardless of the mode of operation of the vehicle, for the purpose of this specification, the passenger and the driver will collectively be referred to as occupants of the vehicle.

Behind the two front seats in Figure 1 is a row of further passenger seats (also not shown) for two or three passengers, also referred to as occupants. In the case of a manually controlled or conventionally controlled vehicle, the driver controls the vehicle 10 through control of the brakes and steering system, and other vehicle functions. The airbag system of the present invention is suitable for use in a conventional vehicle of this type. In Figure 1, an airbag system and a restraint control system for the airbag system are represented schematically and denoted by reference numerals 40 and 34, respectively (the restraint control system may also be referred to as the restraint control module (RCM)). However, the airbag system of the invention is also particularly well suited for use in an autonomous or driverless vehicle (or semi-autonomous vehicle) as certain characteristics of the airbag system complement characteristic features of the occupant compartment of such vehicles.

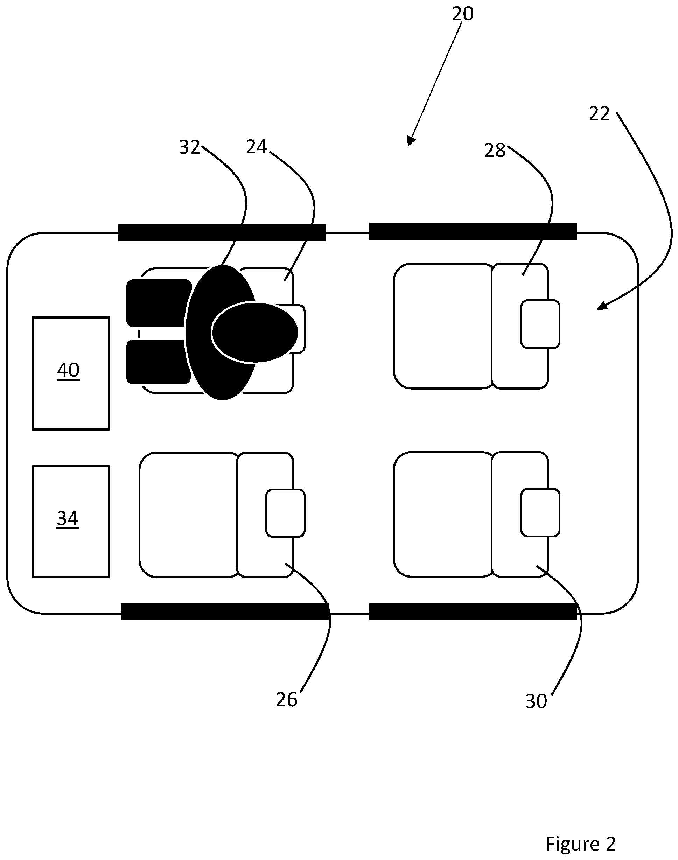

Figure 2 shows a plan view of an occupant compartment 22 of an autonomous or driverless vehicle 20. The occupant compartment 22 includes four seats 24, 26, 28, 30 for four occupants, with all four seats 24, 26, 28, 30 being shown as facing forward in the illustration shown (with the direction of travel being right to left). In practice the seats 24, 26, 28, 30 may be moveable so that they can face forwards or rearwards, face one another, or even face sideways. Only one occupant 32 of the vehicle is shown in the illustration, in the front right seat 24.

Notably, the occupant compartment 22 in Figure 2 does not include a steering wheel for any of the occupants to manually steer the vehicle, likewise, no supporting structure in front of the occupants is provided, such as a dashboard, a facia, or glove box; features that would be commonplace in a conventional, driver controlled vehicle 10 such as that shown in Figure 1. The benefit of not having such features in the occupant compartment 22 is that it may be made more spacious and provide a more uncluttered environment for the occupants. Alternatively, or in addition, the occupant compartment 22 can be made slightly smaller than a conventional vehicle to give the vehicle additional versatility in its application. By removing, as far as is practical, any structures in the occupant compartment 22 that may otherwise occlude the view ahead through the windscreen for the occupants, the perception of space for the occupants in the occupant compartment 22 is greatly enhanced.

With no steering column in the occupant compartment 22, as shown in Figure 2, and no dashboard, the surfaces typically used in a conventional vehicle to define reaction surfaces for airbags as they deploy are not present. As is well known in the art, it is common to use suitably placed and orientated surfaces adjacent to a deployment zone of an airbag to help guide it as it inflates and, in some circumstances, to constrain the airbag's deployed shape. A good example of this is where a typical passenger airbag, mounted in an upper face of a dashboard, is arranged to react against the windscreen above it and the dashboard beneath it as it inflates. These reaction surfaces help guide the airbag into a position suitable to restrain an occupant seated in a front seat. The shape of the airbag and its orientation relative to the windscreen and dashboard are all taken into account to ensure repeatable airbag deployment characteristics. In the case of an autonomous vehicle it may be desirable to omit features like a steering wheel or dashboard. As such, the surfaces available to act as reaction surfaces for the airbags are limited.

In the present invention, this problem is solved through the use of the airbags themselves to provide a reaction surface for another airbag through mutual airbag support. This ensures that the airbags can reliably position themselves correctly during deployment and sustain loading by the occupant 32 in the event of a vehicle impact. This airbag arrangement is particularly well suited for use in a vehicle where limited reaction surfaces are available, such as vehicles which do not require the elements of a driver-operated steering system to control the vehicle.

As in Figure 1, the vehicle 20 is provided with a restraint control system 34, including one or more controllers arranged to receive signals from a plurality of sensors (not shown) mounted on the vehicle which detect when an impact or collision of the vehicle occurs (or is imminent). The vehicle 20 is also provided with an airbag system 40, as in Figure 1. The airbag system 40 may be configured such that, when the severity of the impact is sufficient to require the deployment of airbags and pre-tensioner seatbelts, the controllers 34 respond to such signals by providing a trigger signal to the airbag system 40 of the vehicle to cause the deployment of one or more airbags of the system to restrain the occupant(s) 32. The airbags are arranged to absorb the energy of the occupant loading the airbags during the collision and thus mitigate injury throughout the impact. For simplicity, the airbag system 40 in Figure 2 is represented as a single unit which is located forward of the occupant 32 in the right hand seat 24. In practice, the airbag system 40 may include two or more airbags located within the occupant compartment 22, in front of, to the sides of, to the rear, above and/or below the occupant(s) 32, and may further comprise other deployable restraints such as pre-tensioner seatbelts.

For purposes of this disclosure, it is to be understood that the control system 34 described herein may comprise a control unit or computational device having one or more electronic processors. The vehicle and/or a system thereof may comprise a single control module or electronic controller or alternatively different functions of the controller(s) may be embodied in, or hosted in, different control modules or controllers.

As used herein, the terms 'controller' or 'control module' will be understood to include both a single control module or controller and a plurality of control modules or controllers collectively operating to provide the required control functionality. A set of instructions could be provided which, when executed, cause said control modules(s) to implement the control techniques described herein (including the method(s) described below). By way of example, the set of instructions may be embedded in one or more electronic CPU or processors.

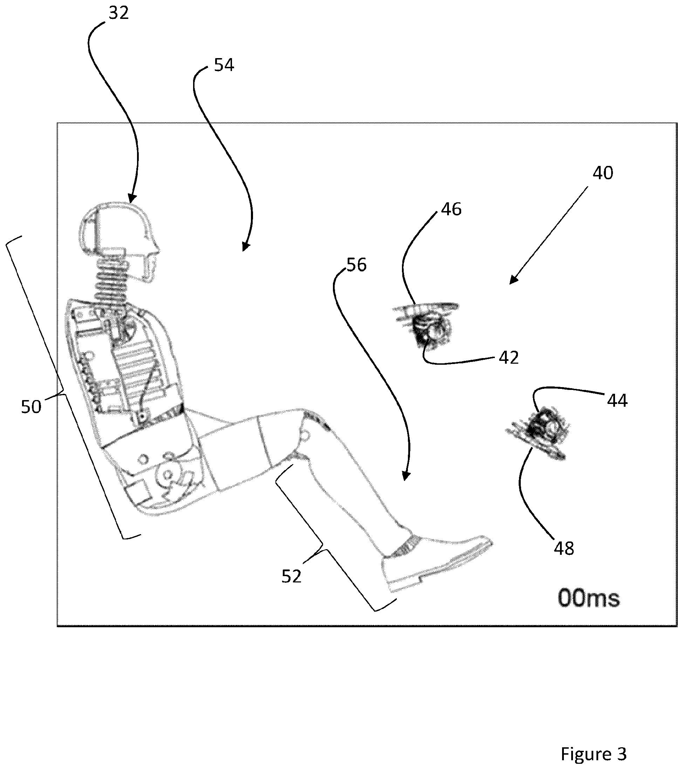

Figures 3 through 10 have been taken from a computer simulation of vehicle impact event and show a sequence of stages in deployment of the airbag system 40 of the invention in the event that a vehicle collision or impact results in an airbag trigger event. The stages are shown at time state intervals of 10ms, with airbag deployment occurring 10ms after the point of collision or impact. What happens at each time state will depend on several factors, including the initial speed and position of the vehicle, the speed and stiffness of the object the vehicle collides with, and the severity of the vehicle deceleration during the event. It will also be appreciated that airbag deployment may be set to occur after a different time interval following collision, slightly before or after 10ms.

The vehicle (not shown) accommodates a vehicle occupant 32, in the form of an anthropomorphic test device (ATD), also known as a crash test dummy, arranged in a sitting position on a vehicle seat (not shown). In this simulation, the vehicle is subjected to a deceleration pulse representative of a typical frontal crash test simulation. Only the occupant and the airbags are shown for clarity, but the mathematical model of the simulation takes into account a vehicle windscreen, a floor and a roof defining a front portion of an occupant compartment of the vehicle. The model also takes into account other components of the interior of the occupant compartment which are not shown, such as the seat on which the occupant is seated. The seat and floor provide reaction surfaces for the occupant in addition to the airbags. The roof and windscreen will provide reaction surfaces for the deploying airbags if they are contacted during the simulation.

Each of the airbags 42, 44 is mounted to a respective mounting structure 46, 48 forming part of the vehicle. The first airbag will be referred to as an upper airbag 42 of the system 40 and the second airbag will be referred to as the lower airbag 44 of the system 40. In this example, each of the airbags 42, 44 has an associated inflator device (not shown) which serves to fill the associated airbag with an inflation gas in the event of a trigger event caused by a vehicle impact or vehicle collision. It will be appreciated that each airbag may have a dedicated inflator or share an inflator with another airbag as may be desired for packaging and weight.

In normal circumstances, and in the absence of a trigger event, the airbags 42, 44 are folded away and retained in a packaged configuration, as illustrated in Figure 3. Typically, each airbag 42, 44 and its associated inflator device is packaged within an airbag module (not identified) which is mounted within the occupant compartment, via mounting means such as an airbag mounting surface, on the vehicle mounting structure 46, 48 respectively. In one embodiment the mounting structures may form part of a common mounting structure, upon which both airbags 42, 44 are mounted, whereas in other embodiments the airbags are mounted on their own mounting structures, as shown in Figure 3. The airbags 42, 44 are intended to restrain the occupant 32 in the event of a vehicle impact, preventing them making direct contact with components such as the windscreen and cushion the occupant 32 as they move forwards as the vehicle 20 comes to a halt at the end of the deceleration pulse.

The body of the occupant 32 needs to be supported during a vehicle impact or collision and in the example shown, the role of supporting the occupant has been divided into an upper body region comprising the head and torso, and a lower body region comprising the occupant's legs. The upper body region identified generally by line 50 and the lower body region identified generally by line 52. The upper and lower body regions 50, 52 define respective upper and lower contact surfaces of the occupant's body which make contact with restraint surfaces defined by the airbags 42, 44 of the airbag system 40 in the event of vehicle impact.

Referring to Figure 3 (time - 0ms), at this time in the simulation, the vehicle, travelling forward with an initial velocity, makes contact with another body, such as a barrier. The time 0ms represents the instant at which contact between the vehicle and the barrier occurs. In the case a real vehicle were to be subjected to this scenario, the restraint control system 34 will start to receive signals from the sensors around the vehicle and will need to determine if the severity of the impact necessitates the generation of a trigger signal. In the case of the mathematical model of this simulation, the trigger signal timing and consequent deployment of the airbags has been calculated by the model. At time - 0ms, the occupant 32 is shown seated in a design condition, a comfortable position in which they would usually travel. At this time, the upper and lower airbags 42, 44 have not yet been triggered. The time at which a trigger signal is issued from the control system 34 to deploy the airbags 42, 44 will depend on the severity of the impact, but is typically in the order of a few milliseconds after time - 0ms. In this embodiment, the inflator devices are triggered together at substantially the same time. The occupant compartment can be considered to have an associated upper restraint region or zone 54 immediately in front of the upper body region 50 of the occupant 32, into which the upper airbag 42 will deploy, and an associated lower restraint region or zone 56 immediately in front of the lower body region 52 of the occupant 32, into which the lower airbag 44 will deploy. The upper restraint region or zone 54 is located between the upper airbag module and its mounting structure and the upper body region 50 of the occupant 32, thus the upper airbag 42 is arranged to deploy so as to be between the occupant and the windscreen. Similarly, the lower restraint region or zone 56 is located between the lower airbag and its mounting structure and the lower body region 52 of the occupant 32, thus the lower airbag 44 is arranged to deploy so as to be between the occupant and a toe-board / most forward region of the vehicle floor in the occupant compartment 22. The toe-board (not shown) may be formed as a lower portion of a bulkhead defining a front edge of the occupant compartment.

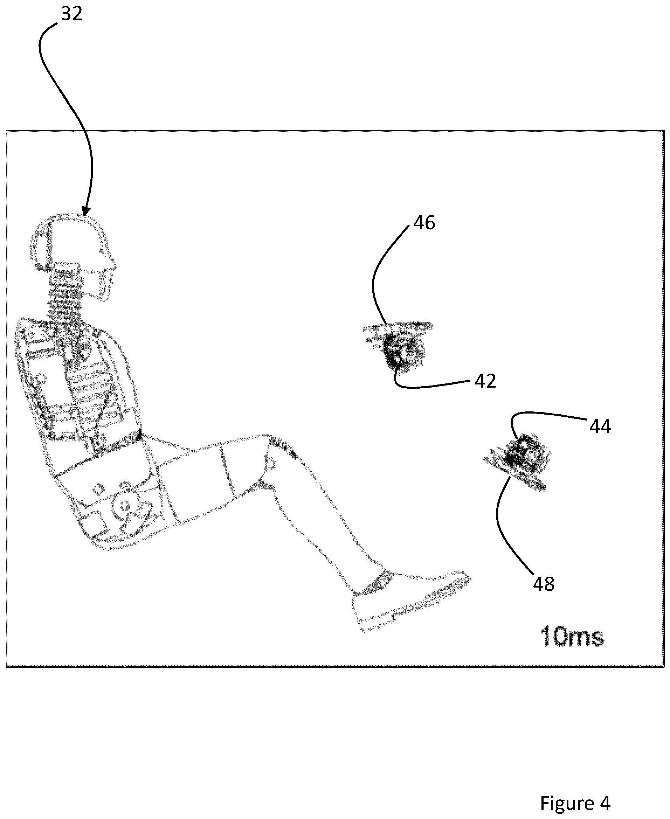

Figure 4 (time - 10ms) shows the position of the occupant 32 and the state of the airbags 42, 44 at time 10ms. At this time, a trigger signal has been issued to the airbags 42, 44 by the restraint control system 34 but the airbags 42, 44 have not yet emerged from their respective housings. Airbag deployment has now commenced.

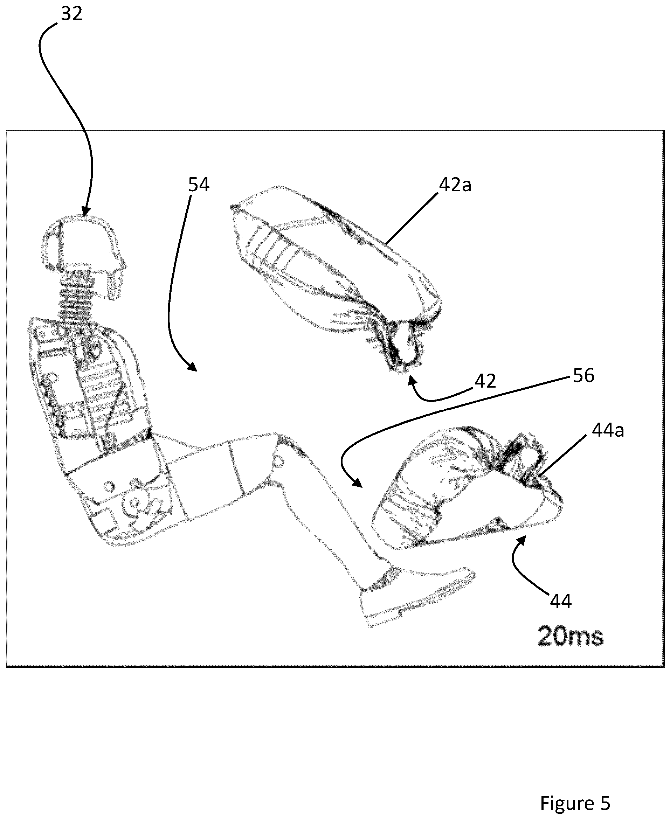

In Figure 5 (time - 20ms) the upper and lower airbags 42, 44 are shown in a partially inflated state in which, in the case of the upper airbag 42, it has started to inflate into the upper restraint region 54 and, in the case of the lower airbag 44, it has started to inflate into the lower restraint region 56. Although not identified in Figure 5, during this period of airbag deployment each of the airbags 42, 44 starts to react against an interior surface (not shown) of the vehicle cabin such as the windscreen, through a forward-facing airbag surface, 42a, 44a respectively. In the case of the upper airbag 42, the forward-facing surface 42a starts to react against a vehicle windscreen of the vehicle (not shown) as it inflates and, in the case of the lower airbag 44, the forward facing surface 44a starts to react against a lower surface of an internal vehicle fascia, such as the toe-board in the occupant compartment (also not shown). At this stage the occupant 32 has not started to move forward relative to the occupant compartment 22 (to any visible extent) under their own momentum and so there is no loading of the airbags 42, 44 by the occupant at this time.

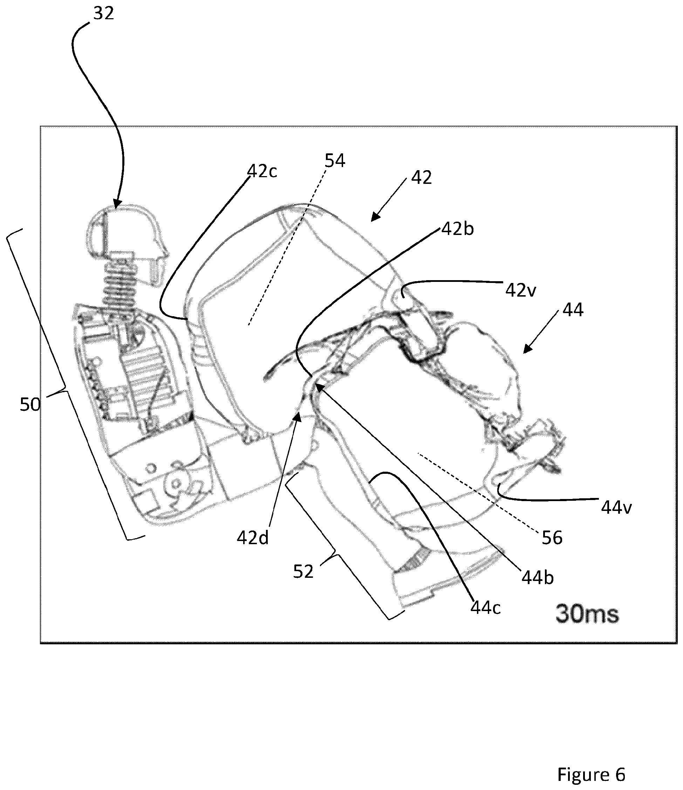

Referring to Figure 6 (time - 30ms), the occupant 32 has started to move forward in the occupant compartment under their own momentum relative to the position at time 20ms. The airbags 42, 44 are more fully inflated, although still only partially inflated. In this view, vent holes 42v, 44v in the upper and lower airbags 42, 44, respectively, can be seen in the region of the airbag mounting means. The provision of vent holes 42v, 44v is well known in the art to first facilitate deployment of the airbags without excessive bag pressure, and subsequently to ensure venting gas allows the bag to absorb the impact energy from the occupant 32. The upper airbag 42 continues to inflate into the upper restraint zone 54 in order to provide support for the upper body region 50. An occupant-facing surface of the upper airbag 42 defines an upper restraint surface 42c which moves through the upper restraint zone 54 and starts to approach the upper region 50 of the occupant as the airbag inflates. Importantly, during this period a lower surface 42b of the upper airbag 42 is brought into contact with an upper surface 44b of the lower airbag 44 at the same time as the upper surface 44b of the lower airbag 44 is brought into contact with the lower surface 42b of the upper airbag 42. The upper surface 44b of the lower airbag 44 therefore defines an airbag reaction surface for the upper airbag 42, and the lower surface 42b of the upper airbag 42 defines an airbag reaction surface for the lower airbag 44. In this way, airbag reaction surfaces 42b, 44b provide mutual airbag support for each other as the airbags 42, 44 continue to inflate towards their fully deployed states and restrain the occupant.

It can be seen in Figure 6 that the lower airbag 44, as well as being deployed upwardly to react against the airbag reaction surface defined by the lower surface 42b of the upper airbag 42, also deploys into the lower restraint zone 56 immediately forward of the occupant 32 and towards a position where it can support and restrain the lower body region 52 of the occupant 32. In the time period illustrated in Figure 6, an occupant-facing surface of the lower airbag 44 therefore defines a lower restraint surface 44c which makes contact with, and starts to restrain, the legs of the occupant 32 as the occupant starts to moves forward within the occupant compartment 22 under their own momentum. In addition, a portion of the lower surface of the upper airbag 42 defines a further restraint surface 42d which makes contact with the occupant's lap, restraining their upward movement. The further restraint surface 42d of the upper airbag 42 further acts as a reaction surface through which the upper airbag loading by the torso gains some support from the occupant's lap.

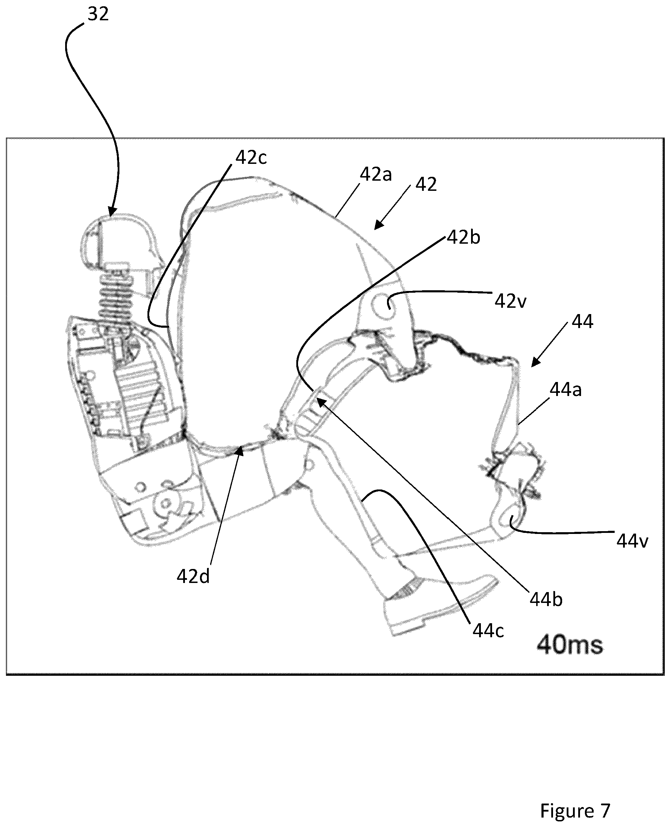

Referring to Figure 7 (time - 40ms), the occupant 32 is now further forward relative to the position at 30ms and the airbags 42, 44 continue to inflate. In this time period the occupant is restrained both by the restraint surface 44c of the lower airbag 44 acting on the lower body region 52 and the restraint surfaces 42c of the upper airbag 42 acting on the upper body region 50. The airbags 42, 44 continue to provide mutual support for one another, through the interaction at the airbag reaction surfaces 42b, 44b, throughout this phase of airbag deployment, and as may be seen clearly at 40ms, the airbags at this point may be considered to be mutually engaged or 'interlocking'. The forward-facing surfaces 42a, 44a of the airbags also react against adjacent interior surfaces of the vehicle cabin throughout this phase.

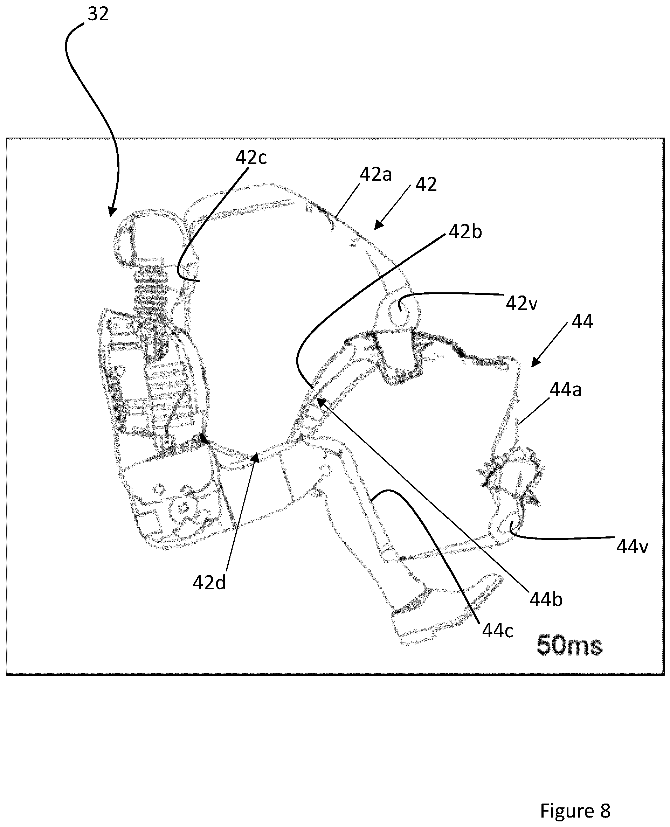

Referring to Figure 8 (time - 50 ms), the airbags 42, 44 are fully inflated and the occupant 32 has moved further forward relative to the position at 40ms. The restraint surfaces 42c, 44c of the upper and lower airbags 42, 44 act to cushion the occupant 32 and restrain further forward movement, mitigating injury which would otherwise occur if the occupant was unrestrained. The airbag reaction surfaces 42b, 44b continue to interact so that the upper and lower airbags 42, 44 provide mutual support for one another. The occupant's knees tend to move slightly upward during this phase as the occupant 32 moves further forward and the feet are supported by the vehicle floor, thus the knees are restrained by the lower airbag 44.

At around 40ms-50ms the airbags are at the maximum volume of inflation.

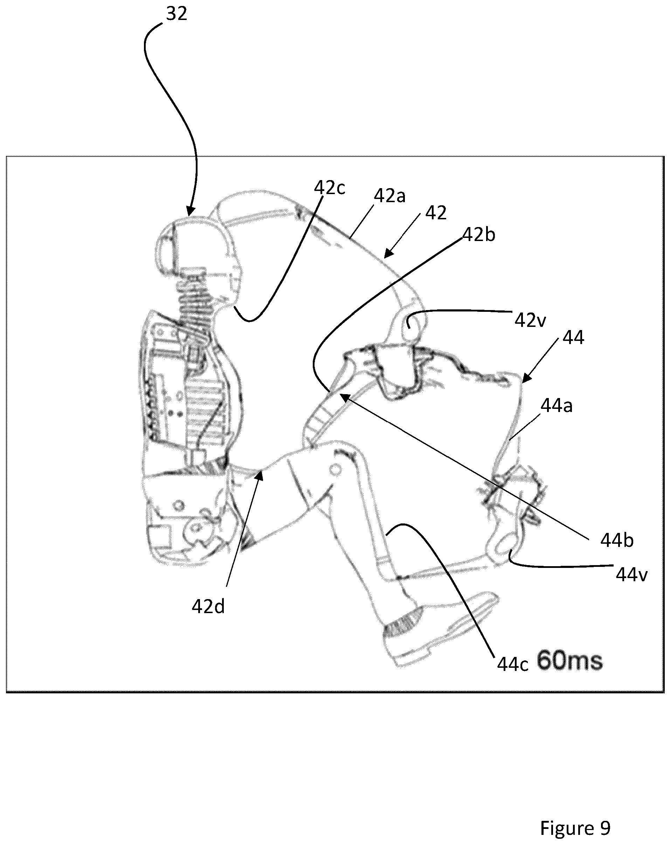

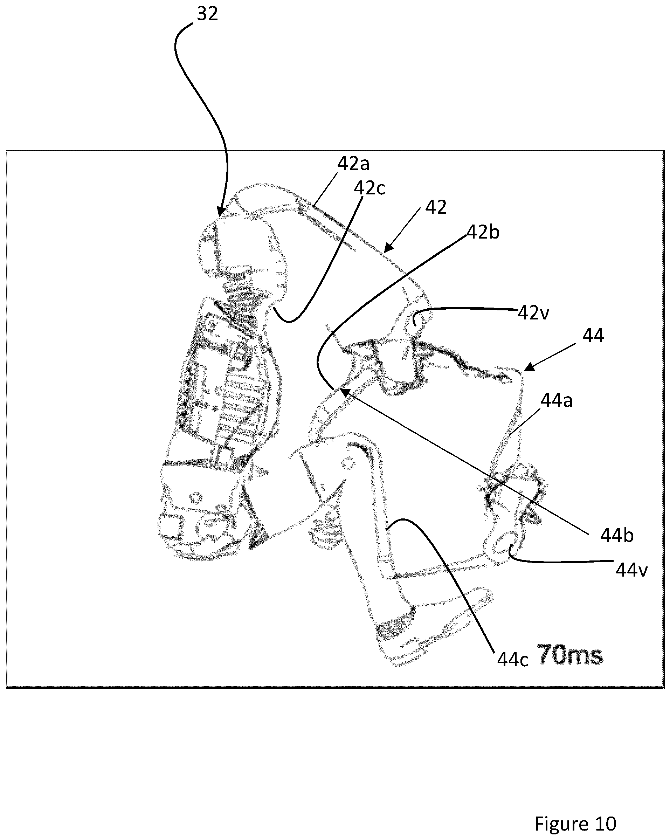

Referring to Figure 9 (time - 60ms) and Figure 10 (time - 70ms), the occupant 32 has moved further forward in the vehicle relative to the position shown in Figure 8, but is being restrained by the upper and lower airbags 42, 44 which continue to provide mutual support for one another via the engaged reaction surfaces 42b, 44b throughout the remainder of the deployment process. At time 60ms the occupant loads the airbags causing them to deflate in a controlled manner as the energy from the forward momentum of the occupant is absorbed, mitigating occupant injury.

At time 60ms, the inflation gasses used to inflate the airbags starts to vent into the occupant compartment via the vent holes 42v, 44v in a manner well known in the art. As such, the airbags 42, 44 start to deflate slightly as the occupant moves deeper into the airbags, continuing to absorb energy. In this example, forward excursion by the occupant into the airbags 42, 44 reaches a peak at around 70ms (Figure 10) as the vehicle has come to rest and the occupant is no-longer moving forward relative to the vehicle.

It will be appreciated that during the period between around 20ms and 70ms, the upper body 50 of the occupant 32 contacts the restraint surface 42c of the upper airbag 42, causing a load to be applied directly to the upper airbag 42. In addition, due to the interaction between the airbags 42, 44 at the reaction surfaces 42b, 44b, a load from the upper region of the occupant 32 is applied indirectly to the lower airbag 44, via said surfaces. The timing of deployment of the airbags 42, 44 is arranged such that, before any loading of the airbags by the occupant 32, either by the upper region 50 or the lower region 52 of the occupant's body, the airbag reactions surfaces 42b, 44b are engaged (between time 20ms and time 30ms) to provide mutual support for one another. This ensures that as loading of the airbags 42, 44 occurs, there is adequate support provided by the airbags and that the deployment of each airbag remains stable during loading by the occupant.

It will be appreciated that airbag shaping and tethering can also be used to further optimise the system, ensuring the engagement of the reaction surfaces 42b, 44b is achieved before either airbag is loaded significantly, if at all, by contact with a body region of the occupant.

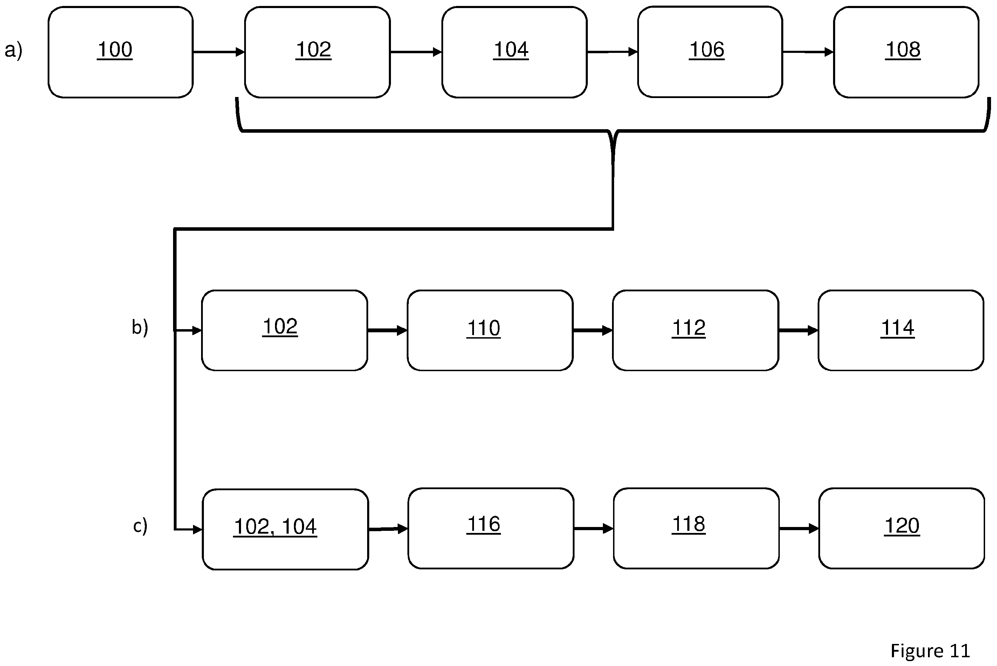

Figure 11 is a flow diagram to show the steps of the method of deployment of the airbag system of the invention. Figure 11(a) shows the overall sequence of steps of airbag deployment, Figure 11(b) shows the steps of deployment for the upper airbag 42 and Figure 11(c) shows the sequence of steps for the lower airbag 44.

Referring to Figure 11(a), at step 100 the sensors on the vehicle detect that there is an impact or collision of the vehicle (or that an impact or collision is imminent) and signals from the sensors are sent to the control system 34 (as shown in Figure 2). At step 102 the upper and lower airbags 42, 44 of the system are triggered so that they begin inflating. The upper and lower airbags 42, 44 may be deployed together, the upper airbag 42 may be triggered before the lower airbag 44, or the lower airbag 44 may be triggered before the upper airbag (step 104). At step 106, the airbags 42, 44 start to inflate and provide a reaction surface 42b, 44b (as shown in Figures 6 to 9) for each other, both during inflation and during occupant loading of the airbags. At step 108, the occupant 32 makes contact with the upper and lower airbags 42, 44 (although contact with the airbags is not necessarily made at the same time). Beyond this, the airbags 42, 44 therefore control occupant deceleration and provide a load limiting function.

With reference to Figure 11(b), and expanding on steps 102 to steps 108 in Figure 11(a), the upper airbag 42 uses reaction surfaces defined by: the lower airbag; the inside surface of the windscreen; interior surfaces of trim panels inside the occupant compartment 22; and the airbag modules, to ensure the airbag deploys correctly (step 110). It will be understood that for a deploying airbag, the body of the airbag module itself and any associated door or cover used to protect the airbag when in a stowed condition, may also provide a reaction surface at some point during deployment. At step 112 the upper body region 50 of the occupant 32 loads the upper airbag 42 and the reaction surfaces mentioned previously are used to maintain airbag position and stability. At step 114, deceleration of the occupant is controlled by the load limiting function of the upper airbag.

With reference to Figure 11(c) and expanding on steps 102 to steps 108 in Figure 11(a), the lower airbag inflates either at the same time as the upper airbag, before the upper airbag inflates or after the upper airbag inflates (step 102, 104). At step 116 the lower airbag 44 uses reaction surfaces defined by the upper airbag, additionally, the lower airbag 44 may also use reaction surfaces defined by one or more of: the inside surface of the windscreen; interior surfaces of trim panels inside the occupant compartment 22; airbag modules; and/or the floor or toe-board/bulkhead of the occupant compartment 22, to ensure the airbag deploys correctly. At step 118 the lower body region 52 of the occupant 32 loads the lower airbag 44 and the reaction surfaces are used to maintain position and stability of the lower airbag 44. At step 120, deceleration of the lower body region 52 of the occupant 32 is controlled by the load limiting function of the lower airbag 44.

It will be appreciated that various changes and modifications can be made to the present invention without departing from the scope of the present application. For example, the upper and lower airbags 42, 44 may be mounted on a common mounting structure within the occupant compartment or may be mounted on separate mounting structures (separate mounting structures 46, 48 are shown in Figure 3), depending on the configuration inside the vehicle. The inflator device for the upper airbag may be a separate device from that for the lower airbag, or alternatively a common inflator device may be used to inflate both devices.

The aforementioned embodiment has been described in the context of an airbag system which includes a single, upper airbag and a single, lower airbag with the airbags reacting against one another during the deployment process to provide mutual airbag support and restraint for a single passenger. The airbag system is described as one in which the upper and lower airbags extend across that portion of the vehicle cabin forward of a driver or other occupant of the vehicle.

However, other configurations of airbags are equally viable within the occupant compartment, utilising the same benefit of mutual airbag support through the deployment process. In practice the vehicle may include more than two airbags at various locations within the occupant compartment and one or more pairs of airbags 42, 44, such as those shown in the accompanying figures, may be provided with each airbag of one pair interacting with its related airbag so that reaction surfaces thereof interact to provide mutual support for the other airbag of the pair.

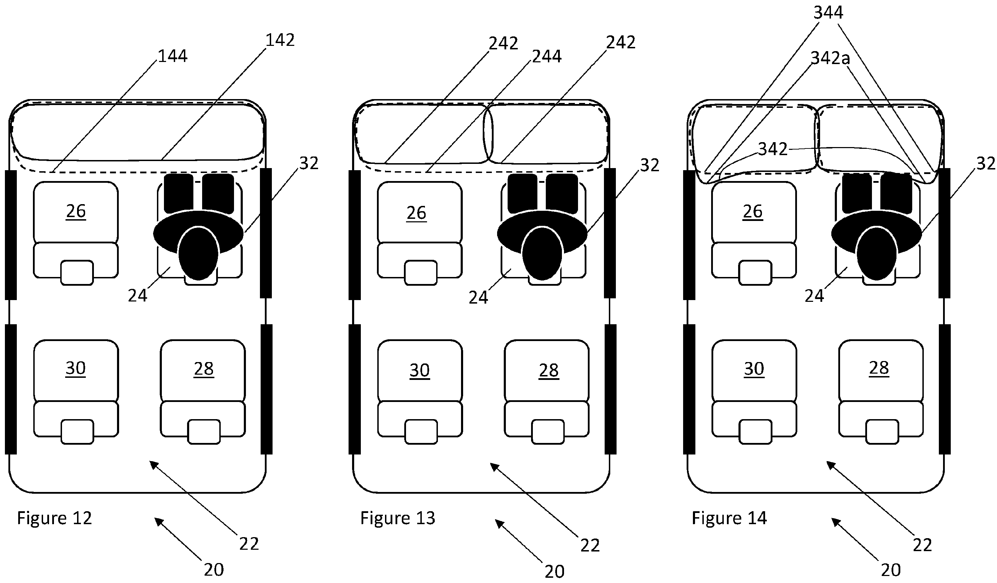

Three examples are shown in the following Figures 12 to 14, although these are not intended to be limiting examples and other alternative configurations are possible depending on the interior layout of the occupant compartment 22, the intended occupancy of the vehicle and the application of the vehicle. In Figures 12 to 14, like reference numbers are used to denote similar parts to those identified in earlier Figures.

Referring to Figure 12, the lower airbag 144, in its fully deployed state, is denoted by the dashed line and the upper airbag 142, in its fully deployed state, is denoted by the solid line. The airbags 142, 144 form an airbag pair with each airbag 142, 144 being of approximately equal volume when fully deployed. The airbags 142, 144 also have an approximately equal width when fully deployed and extend across substantially the full transverse width of the occupant compartment 22.

Alternatively, in another embodiment (not shown) the airbags of Figure 12 may have different volumes as may be desired in order, when fully deployed, to adequately fill the volume between the seated occupant and the front interior surfaces (not identified) of the occupant compartment 22.

In another embodiment, the lower airbag may be larger in volume and/or width than the upper airbag. An example of one such configuration is shown in Figure 13 which shows the lower airbag 244 having a larger inflated volume and extending across substantially the full transverse width of the occupant compartment 22 and two upper airbags 242, each of which has a smaller volume than the lower airbag 244 and extends, when fully inflated, across only part of the transverse width of the occupant compartment. The two upper airbags 242 are configured to interact, through respective reaction surfaces on the upper airbags, with a single reaction surface on the upper surface of the lower airbag 244. In this case, the lower airbag 244 therefore provides support for two upper airbags 242. In this scenario the lower airbag 244 provides a restraint for lower body regions of both the occupant 32 in the front right seat 24 of the occupant compartment 22 and also any occupant (not shown) seated in the front left seat 26 of the occupant compartment 22. The upper airbags 242 provide a restraint for upper body regions of a respective one of the occupants seated immediately rearward of the respective airbag 242.

A further example is shown in Figure 14 where there are two lower airbags 344 and two upper airbags 342. The upper airbag 342 and the lower airbag 344 on the left hand side of the occupant compartment form a first airbag pair, and the upper airbag 342 and lower airbag 344 on the right hand side of the occupant compartment form a second airbag pair. Each pair of airbags serves to restrain a respective one of the right and left side occupants of the front seats 24, 26 when the airbags are inflated following a vehicle impact event. When fully inflated, one upper airbag 342 resides above a respective one of the lower airbags 344 so that the airbags of a common pair provide mutual airbag support for one another, as described for previous embodiments. Each of the airbags, when fully inflated, extends across only a part of the transverse width of the occupant compartment 22 so as to fill the region immediately forward of the respective occupant that the airbag pair is intended to restrain. The configuration of Figure 14 is therefore similar to the embodiment described in Figures 3 to 10, but with two airbag pairs, one on each side of the occupant compartment 22.

The airbags may have a variety of different shapes when deployed, depending on the configuration inside the occupant compartment 22 and the region of the occupant which reacts against each airbag. Figure 14 illustrates one example of this where it can be seen that the upper airbags 342 have a different shape to the lower airbags 344. Here, each of the upper airbags 342 is shaped so that, when fully inflated, the airbag includes a region of enhanced volume towards its outboard edge which projects slightly further rearward into the occupant compartment 22 compared to the relatively inboard portion of the airbag. This contouring of the upper airbags 342 defines a wing portion 342a for the airbag, one on each side of the airbag, to provide an enhanced airbag volume at each outboard airbag edge. The enhanced edge volume of the wing portions 342a provides the benefit of additional isolation of the occupants from respective ones of the A-pillars (not shown) of the vehicle which support the windscreen of the vehicle and define part of the internal boundary of the occupant compartment.

Where upper airbags 242, 342 are shown in a side by side configuration in Figures 13 and 14, it will be appreciated that they are shown in a condition of full inflation, each occupying a volume within the occupant compartment 22 that slightly overlaps the volume occupied by the adjacent upper airbag 242, 342 near the longitudinal centreline of the vehicle 20. However, when both upper airbags 242, 342 are deployed, not only do they react against the lower airbag 244 or airbags 344 as shown, but also against each other. The provision of upper airbags 242, 342 each independently capable of occupying slightly more than half the width of the occupant compartment 22 is beneficial in ensuring that the surface of each upper airbag 242, 342 arranged to contact and support the occupant is well supported, even in the event of an offset frontal impact. This arrangement ensures that there is no gap between the fully deployed upper airbags 242, 342 and as such, greatly reduces the chance of an occupant moving between the two upper airbags 242, 342 during a collision.

In other embodiments, an additional third airbag may be disposed between the first and second airbags so that, as the airbags are inflated, the third airbag defines a reaction surface for the first airbag on one of its sides and a reaction surface for the second airbag on its opposed side.

In other embodiments, one or both of the airbags when fully deployed may be approximately cuboid with generally parallel and substantially flat left and right airbag sides. In another example, the sides of one or both of the airbags when fully deployed may be configured so that at least a portion of the sides faces towards the occupant, to itself absorb some of the energy from the loading from the occupant during the vehicle impact and defining a further restraint surface for the occupant. For example, one or both of the airbags may be trapezoidal in shape so that the left and right airbag sides are not parallel with one another. It will be appreciated that further configurations of the airbags within the airbag system of the invention may be envisaged without departing from the scope of the appended claims.

In any embodiment of the invention, due to the different requirements of the upper and lower airbags, the airbag system may be configured so that the lower airbag has a greater stiffness, when fully deployed, so as to provide adequate support for the upper airbag, which loads the lower airbag through the reaction surfaces, and support for the lower region of the occupant which reacts directly against the lower airbag.

## Claims

1. An airbag system (40) for restraining an occupant of a vehicle during a vehicle impact, the airbag system (40) having at least a first airbag (42) and a second airbag (44), each of the first and second airbags (42, 44) being inflatable upon deployment and comprising:
a mounting means for mounting the first and second airbags (42, 44) in an occupant compartment of the vehicle;
a restraint surface (42c, 44c ) arranged to contact and restrain at least a region of a vehicle occupant in the event of a vehicle impact; and
an airbag reaction surface (42b, 44b),
wherein the airbag reaction surface (42b) of the first airbag (42) is arranged, during airbag deployment, to react against the airbag reaction surface (44b)of the second airbag (44) so that the first and second airbags (42, 44) provide mutual airbag support for one another through the airbag reaction surface (42b, 44b)s;
wherein the first and second airbags (42, 44) are configured to have a different stiffness from one another when fully inflated, **characterized in** the different stiffness being achieved by using different materials for the first and second airbags (42, 44) or by coating the first and second airbags (42, 44) with different coatings.

2. The airbag system (40) as claimed in claim 1, wherein both the first and second airbags (42, 44) are configured to further react, as they are deployed, against respective first and second vehicle reaction surfaces defined within the occupant compartment of the vehicle.

3. The airbag system (40) as claimed in claim 1 or claim 2, wherein the first airbag (42) defines an upper airbag arranged to deploy into an upper restraint region of the interior occupant compartment and the second airbag (44) defines a lower airbag arranged to deploy into a lower restraint region of the occupant compartment, when the airbags (42, 44) are deployed.

4. The airbag system (40) as claimed in claim 3, wherein the lower airbag defines a lower restraint surface (42c, 44c ) which is configured to contact and bear a load from the occupant during the vehicle impact event when the first and second airbags (42, 44) are deployed, both through direct loading of the lower airbag from a lower body region of the occupant and, indirectly, through loading of the upper airbag from an upper body region of the occupant.

5. The airbag system (40) as claimed in claim 3 or claim 4, wherein the upper airbag defines an upper restraint surface (42c, 44c ) which is configured to contact and bear a load from the occupant directly from an upper body region of the occupant.

6. The airbag system (40) as claimed in any of claims 3 to 5, wherein the lower airbag is configured to have a greater stiffness, compared to the upper airbag, when fully inflated.

7. The airbag system (40) as claimed in any of claims 1 to 6, wherein, the first and second airbags (42, 44) each have substantially the same volume when fully inflated.

8. The airbag system (40) as claimed in any of claims 1 to 7, wherein at least one of the first and second airbags (42, 44) includes left and right side surfaces, and wherein at least a portion of at least one of the left and right side surfaces faces towards the occupant to define a further restraint surface (42d) to aid contact and restraint of the occupant during airbag deployment.

9. The airbag system (40) as claimed in any of claims 1 to 8, wherein at least one of the first and second airbags (42, 44) includes a wing portion arranged to provide enhanced airbag coverage for a feature within the occupant compartment when said at least one of the first and second airbags (42, 44) is inflated.

10. The airbag system (40) as claimed in any of claims 1 to 9, comprising first, second and third airbags, wherein one of the airbags defines a reaction surface for the other two airbags.

11. The airbag system (40) as claimed in claim 10, wherein, when fully inflated, the third airbag is disposed between the first and second airbags to define opposed reaction surfaces for a respective one of the first and second airbags.

12. The airbag system (40) as claimed in claim 11, wherein the mounting means comprises a common mounting structure for supporting the first inflator device and the second inflator device.

13. A vehicle comprising a vehicle occupant compartment and an airbag system (40) as claimed in any of claims 1 to 12.

14. A method of deploying an airbag system (40) in a vehicle, the airbag system (40) comprising at least a first airbag (42) and a second airbag (44) so as to restrain a vehicle occupant during a vehicle impact event, each of the first and second airbags (42, 44) defining a restraint surface (42c, 44c ) arranged to contact and restrain at least a region of the vehicle occupant in the event of a vehicle impact, wherein the first and second airbags (42, 44) are configured to have a different stiffness from one another when fully inflated, the different stiffness being achieved by using different materials for the first and second airbags (42, 44) or by coating the first and second airbags (42, 44) with different coatings, the method comprising:
deploying the first and second airbags (42, 44) so that a surface of the first airbag (42) defines an airbag reaction surface (42b, 44b) for the second airbag (44) as it deploys and a surface of the second airbag (44) defines an airbag reaction surface (42b, 44b) for the first airbag (42) as it deploys so that the first and second airbags (42, 44) provide mutual airbag support for one another through the airbag reaction surface (42b, 44b)s, and restraining the vehicle occupant during the vehicle impact only after the first airbag (42) has reacted against the airbag reaction surface (42b, 44b) of the second airbag (44).

## Patentansprüche

1. Airbagsystem (40) zum Schützen eines Insassen eines Fahrzeugs während eines Fahrzeugaufpralls, wobei das Airbagsystem (40) mindestens einen ersten Airbag (42) und einen zweiten Airbag (44) aufweist, wobei jeder des ersten und des zweiten Airbags (42, 44) bei einer Entfaltung aufblasbar ist und umfasst:
eine Befestigungseinrichtung zum Befestigen des ersten und des zweiten Airbags (42, 44) in einem Insassenraum des Fahrzeugs;
eine Schutzoberfläche (42c, 44c), die angeordnet ist, um im Falle eines Fahrzeugaufpralls mindestens einen Bereich eines Fahrzeuginsassen zu berühren und zu schützen; und
eine Airbagreaktionsoberfläche (42b, 44b),
wobei die Airbagreaktionsoberfläche (42b) des ersten Airbags (42) während einer Airbagentfaltung angeordnet ist, um gegen die Airbagreaktionsoberfläche (44b) des zweiten Airbags (44) zu reagieren, sodass der erste und der zweite Airbag (42, 44) durch die Airbagreaktionsoberfläche (42b, 44b) gegenseitige Airbagunterstützung füreinander bereitstellen;
wobei der erste und der zweite Airbag (42, 44) konfiguriert sind, um, wenn sie vollständig aufgeblasen sind, eine unterschiedliche Steifigkeit aufzuweisen, **dadurch gekennzeichnet, dass** die unterschiedliche Steifigkeit durch Verwenden unterschiedlicher Materialien für den ersten und den zweiten Airbag (42, 44) oder durch Beschichten des ersten und des zweiten Airbags (42, 44) mit unterschiedlichen Beschichtungen erreicht wird.

2. Airbagsystem (40) nach Anspruch 1, wobei sowohl der erste als auch der zweite Airbag (42, 44) konfiguriert sind, um, wenn sie entfaltet werden, gegen eine erste beziehungsweise eine zweite Fahrzeugreaktionsoberfläche zu reagieren, die innerhalb des Insassenraums des Fahrzeugs definiert sind.

3. Airbagsystem (40) nach Anspruch 1 oder 2, wobei der erste Airbag (42) einen oberen Airbag definiert, der angeordnet ist, um sich in einem oberen Schutzbereich des Insassenraums zu entfalten, und der zweite Airbag (44) einen unteren Airbag definiert, der angeordnet ist, um sich in einem unteren Schutzbereich des Insassenraums zu entfalten, wenn die Airbags (42, 44) entfaltet werden.

4. Airbagsystem (40) nach Anspruch 3, wobei der untere Airbag eine untere Schutzoberfläche (42c, 44c) definiert, die konfiguriert ist, um während des Fahrzeugaufpralls, wenn der erste und der zweite Airbag (42, 44) entfaltet werden, den Insassen zu berühren und eine Belastung von ihm aufzunehmen, sowohl durch die direkte Belastung des unteren Airbags von einem unteren Körperbereich des Insassen als auch indirekt durch die Belastung des oberen Airbags von einem oberen Körperbereich des Insassen.

5. Airbagsystem (40) nach Anspruch 3 oder 4, wobei der obere Airbag eine obere Schutzoberfläche (42c, 44c) definiert, die konfiguriert ist, um den Insassen zu berühren und eine Belastung von ihm direkt von einem Oberkörperbereich aufzunehmen.

6. Airbagsystem (40) nach einem der Ansprüche 3 bis 5, wobei der untere Airbag konfiguriert ist, um im Vergleich zu dem oberen Airbag eine größere Steifigkeit aufzuweisen, wenn er vollständig aufgeblasen ist.

7. Airbagsystem (40) nach einem der Ansprüche 1 bis 6, wobei der erste und der zweite Airbag (42, 44), wenn sie vollständig aufgeblasen sind, jeweils im Wesentlichen das gleiche Volumen aufweisen.

8. Airbagsystem (40) nach einem der Ansprüche 1 bis 7, wobei mindestens einer des ersten und des zweiten Airbags (42, 44) eine linke und eine rechte Seitenoberfläche umfasst und wobei mindestens ein Abschnitt mindestens einer der linken und der rechten Seitenoberfläche dem Insassen zugewandt ist, um eine weitere Schutzoberfläche (42d) zu definieren, um die Berührung und den Schutz des Insassen während der Airbagentfaltung zu fördern.

9. Airbagsystem (40) nach einem der Ansprüche 1 bis 8, wobei mindestens einer des ersten und des zweiten Airbags (42, 44) einen Flügelabschnitt einschließt, der angeordnet ist, um eine verbesserte Airbagabdeckung für ein Merkmal innerhalb des Insassenraums bereitzustellen, wenn mindestens einer des ersten und des zweiten Airbags (42, 44) aufgeblasen ist.

10. Airbagsystem (40) nach einem der Ansprüche 1 bis 9, umfassend einen ersten, einen zweiten und einen dritten Airbag, wobei einer der Airbags eine Reaktionsoberfläche für die anderen zwei Airbags definiert.

11. Airbagsystem (40) nach Anspruch 10, wobei der dritte Airbag, wenn er vollständig aufgeblasen ist, zwischen dem ersten und dem zweiten Airbag angeordnet ist, um gegenüberliegende Reaktionsoberflächen für einen jeweiligen des ersten und des zweiten Airbags zu definieren.

12. Airbagsystem (40) nach Anspruch 11, wobei die Befestigungsmittel eine gemeinsame Befestigungsstruktur zum Unterstützen der ersten Aufblasvorrichtung und der zweiten Aufblasvorrichtung umfassen.

13. Fahrzeug, umfassend einen Insassenraum und ein Airbagsystem (40) nach einem der Ansprüche 1 bis 12.

14. Verfahren zum Entfalten eines Airbagsystems (40) in einem Fahrzeug, das Airbagsystem (40) umfassend mindestens einen ersten Airbag (42) und einen zweiten Airbag (44), um einen Fahrzeuginsassen während eines Fahrzeugaufpralls zu schützen, wobei jeder des ersten und des zweiten Airbags (42, 44) eine Schutzoberfläche (42c, 44c) definiert, die angeordnet ist, um im Falle eines Fahrzeugaufpralls mindestens einen Bereich des Fahrzeuginsassen zu berühren und zu schützen, wobei der erste und der zweite Airbag (42, 44) konfiguriert sind, um, wenn sie vollständig aufgeblasen sind, eine unterschiedliche Steifigkeit aufzuweisen, wobei die unterschiedliche Steifigkeit durch Verwenden unterschiedlicher Materialien für den ersten und den zweiten Airbag (42, 44) oder durch Beschichten des ersten und des zweiten Airbags (42, 44) mit unterschiedlichen Beschichtungen erreicht wird, das Verfahren umfassend:
Entfalten des ersten und des zweiten Airbags (42, 44), sodass eine Oberfläche des ersten Airbags (42) eine Airbagreaktionsoberfläche (42b, 44b) für den zweiten Airbag (44) definiert, wenn er sich entfaltet, und eine Oberfläche des zweiten Airbags (44) eine Airbagreaktionsoberfläche (42b, 44b) für den ersten Airbag (42) definiert, wenn er sich entfaltet, sodass der erste und der zweite Airbag (42, 44) durch die Airbagreaktionsoberflächen (42b, 44b) gegenseitige Airbagunterstützung füreinander bereitstellen, und Schützen des Fahrzeuginsassen während des Fahrzeugaufpralls erst, nachdem der erste Airbag (42) gegen die Airbagreaktionsoberfläche (42b, 44b) des zweiten Airbags (44) reagiert hat.

## Revendications

1. Système de sac gonflable (40) destiné à retenir un occupant d'un véhicule lors d'un choc de véhicule, le système de sac gonflable (40) ayant au moins un premier sac gonflable (42) et un deuxième sac gonflable (44), chacun des premier et deuxième sacs gonflables (42, 44) étant gonflable lors du déploiement et comprenant :
un moyen de montage destiné à monter les premier et deuxième sacs gonflables (42, 44) dans un habitacle du véhicule ;
une surface de retenue (42c, 44c) disposée de sorte à entrer en contact et à retenir au moins une partie d'un occupant de véhicule en cas de choc de véhicule ; et
une surface de réaction de sac gonflable (42b, 44b),
dans lequel la surface de réaction de sac gonflable (42b) du premier sac gonflable (42) est disposée, lors du déploiement de sac gonflable, de sorte à réagir contre la surface de réaction de sac gonflable (44b) du deuxième sac gonflable (44) de sorte que les premier et deuxième sacs gonflables (42, 44) fournissent un soutien mutuel de sac gonflable l'un pour l'autre à travers les surfaces de réaction de sac gonflable (42b, 44b) ;
dans lequel les premier et deuxième sacs gonflables (42, 44) sont conçus pour avoir une rigidité différente l'un de l'autre lorsqu'ils sont complètement gonflés, **caractérisé en ce que** la rigidité différente est obtenue en utilisant des matériaux différents pour les premier et deuxième sacs gonflables (42, 44) ou en recouvrant les premier et deuxième sacs gonflables (42, 44) avec des revêtements différents.

2. Système de sac gonflable (40) selon la revendication 1, dans lequel les premier et deuxième sacs gonflables (42, 44) sont tous deux conçus pour réagir davantage, lorsqu'ils sont déployés, contre des première et seconde surfaces de réaction de véhicule respectives définies à l'intérieur de l'habitacle du véhicule.

3. Système de sac gonflable (40) selon la revendication 1 ou la revendication 2, dans lequel le premier sac gonflable (42) définit un sac gonflable supérieur disposé de sorte à se déployer dans une zone de retenue supérieure de l'habitacle intérieur et le deuxième sac gonflable (44) définit un sac gonflable inférieur disposé de sorte à se déployer dans une zone de retenue inférieure de l'habitacle, lorsque les sacs gonflables (42, 44) sont déployés.

4. Système de sac gonflable (40) selon la revendication 3, dans lequel le sac gonflable inférieur définit une surface de retenue inférieure (42c, 44c) qui est conçue pour entrer en contact et supporter une charge de l'occupant lors du choc de véhicule lorsque les premier et deuxième sacs gonflables (42, 44) sont déployés, à la fois à travers une charge directe du sac gonflable inférieur à partir d'une partie de corps inférieure de l'occupant et, indirectement, à travers une charge du sac gonflable supérieur à partir d'une partie de corps supérieure de l'occupant.

5. Système de sac gonflable (40) selon la revendication 3 ou la revendication 4, dans lequel le sac gonflable supérieur définit une surface de retenue supérieure (42c, 44c) qui est conçue pour entrer en contact et supporter une charge de l'occupant directement à partir d'une partie de corps supérieure de l'occupant.

6. Système de sac gonflable (40) selon l'une quelconque des revendications 3 à 5, dans lequel le sac gonflable inférieur est conçu pour avoir une plus grande rigidité, par rapport au sac gonflable supérieur, lorsqu'il est complètement gonflé.

7. Système de sac gonflable (40) selon l'une quelconque des revendications 1 à 6, dans lequel les premier et deuxième sacs gonflables (42, 44) ont chacun sensiblement le même volume lorsqu'ils sont complètement gonflés.

8. Système de sac gonflable (40) selon l'une quelconque des revendications 1 à 7, dans lequel au moins l'un des premier et deuxième sacs gonflables (42, 44) comporte des surfaces latérales gauche et droite, et dans lequel au moins une partie d'au moins l'une des surfaces latérales gauche et droite fait face à l'occupant afin de définir une autre surface de retenue (42d) de manière à faciliter le contact et la retenue de l'occupant pendant un déploiement de sac gonflable.

9. Système de sac gonflable (40) selon l'une quelconque des revendications 1 à 8, dans lequel au moins l'un des premier et deuxième sacs gonflables (42, 44) comporte une partie d'aile disposée de sorte à fournir une couverture de sac gonflable améliorée pour une caractéristique à l'intérieur de l'habitacle lorsque ledit au moins l'un des premier et deuxième sacs gonflables (42, 44) est gonflé.

10. Système de sac gonflable (40) selon l'une quelconque des revendications 1 à 9, comprenant des premier, deuxième et troisième sacs gonflables, dans lequel l'un des sacs gonflables définit une surface de réaction pour les deux autres sacs gonflables.

11. Système de sac gonflable (40) selon la revendication 10, dans lequel, lorsqu'il est complètement gonflé, le troisième sac gonflable est disposé entre les premier et deuxième sacs gonflables afin de définir des surfaces de réaction opposées pour l'un respectif des premier et deuxième sacs gonflables.

12. Système de sac gonflable (40) selon la revendication 11, dans lequel le moyen de montage comprend une structure de montage commune destinée à supporter le premier dispositif de gonflage et le second dispositif de gonflage.

13. Véhicule comprenant un habitacle de véhicule et un système de sac gonflable (40) selon l'une quelconque des revendications 1 à 12.

14. Procédé de déploiement d'un système de sac gonflable (40) dans un véhicule, le système de sac gonflable (40) comprenant au moins un premier sac gonflable (42) et un deuxième sac gonflable (44) de manière à retenir un occupant de véhicule en cas de choc de véhicule, chacun des premier et deuxième sacs gonflables (42, 44) définissant une surface de retenue (42c, 44c) disposée de sorte à entrer en contact et à retenir au moins une partie d'un occupant de véhicule en cas de choc de véhicule, dans lequel les premier et deuxième sacs gonflables (42, 44) sont conçus pour avoir une rigidité différente l'un de l'autre lorsqu'ils sont complètement gonflés, la rigidité différente étant obtenue en utilisant des matériaux différents pour les premier et deuxième sacs gonflables (42, 44) ou en recouvrant les premier et deuxième sacs gonflables (42, 44) avec des revêtements différents, le procédé comprenant :
le déploiement des premier et deuxième sacs gonflables (42, 44) de sorte qu'une surface du premier sac gonflable (42) définit une surface de réaction de sac gonflable (42b, 44b) pour le deuxième sac gonflable (44) lorsqu'il se déploie et qu'une surface du deuxième sac gonflable (44) définit une surface de réaction de sac gonflable (42b, 44b) pour le premier sac gonflable (42) lorsqu'il se déploie, de sorte que les premier et deuxième sacs gonflables (42, 44) fournissent un soutien mutuel de sac gonflable l'un pour l'autre à travers les surfaces de réaction de sac gonflable (42b, 44b) ; et la retenue de l'occupant de véhicule lors du choc de véhicule uniquement après que le premier sac gonflable (42) a réagi contre la surface de réaction de sac gonflable (42b, 44b) du deuxième sac gonflable (44).
